# EUROPEAN PATENT SPECIFICATION

(11) **EP 3 602 331 B1**
(45) Date of publication and mention of the grant of the patent: **13.04.2022**
(21) Application number: 18762692.4
(22) Date of filing: 10.08.2018
(51) Int. Cl.: G06F 40/171, G06F 3/0354, G06F 3/0488, G06K 9/00

(54) **ELECTRONIC TEXT PEN SYSTEMS AND METHODS**
ELEKTRONISCHE TEXTSTIFTSYSTEME UND VERFAHREN
SYSTÈMES ET PROCÉDÉS DE STYLOS ÉLECTRONIQUES POUR TEXTE

(30) Priority: 20.11.2017 US 201715818637
(43) Date of publication of application: 05.02.2020
(73) Proprietor: Google LLC, Mountain View, CA 94043 (US)
(72) Inventor: BUCKLEY, Thomas, Mountain View, California 94043 (US); CIRIMELE, Maria, Mountain View, California 94043 (US); MICKLE, Robert, Mountain View, California 94043 (US)
(74) Representative: Betten & Resch
(86) International application number: PCT/US2018/046358
(87) International publication number: WO 2019/099075

(56) References cited:
- US-A1- 2006 257 025
- US-A1- 2007 097 102
- US-A1- 2016 148 046
- US-A1- 2016 179 365

## Description

### CROSS-REFERENCE TO RELATED APPLICATIONS

The present application claims the benefit of and priority to U.S. Patent Application Serial No. 15/818,637, entitled "ELECTRONIC TEXT PEN SYSTEMS AND METHODS," filed on November 20, 2017,

### BACKGROUND

Pen-enabled devices are becoming more commonplace and display digitizers are becoming standardized components of laptop computers and other computing devices. Pen input allows handwriting of text, which can often be more conducive to creative endeavors and brainstorming than using a traditional keyboard and mouse. However, various opportunities remain for creating an electronic handwriting input environment that moves beyond the realm of pen and paper by harnessing the speed and power of modem computing devices.

US 2006/257025 A1 discloses displaying a writing guide for a free-form document editor by detecting electronic ink, classifying the detected ink as corresponding to handwriting or a drawing, and displaying a handwriting guide or a drawing guide in response to classifying the detected ink as handwriting or a drawing, respectively. The writing guides can provide feedback regarding the classification of the detected ink and can be resized as additional ink is detected. The handwriting guide can comprise a writing area, writing guide portion, bullet guide, indent marker, character notches, gesture guide, or sacrificial guide to create meaningful structure within an outline object of an electronic document.

### SUMMARY

Aspects of the subject technology provide systems and methods for providing a text pen mode providing unobtrusive writing guidance for improved legibility and organization. In the text pen mode, a guideline may be shown that corresponds to a detected writing baseline, which may adjust over time as additional writing is provided. By default, the guideline may be horizontally straight, but the text pen mode may also support angled, curved, or irregular guidelines. A goal of the text pen mode is to encourage creativity and freeform mixed layouts where drawings, figures, and text may be placed anywhere in the document. To that end, the guideline may extend out a certain distance according to various considerations, including heuristics, machine learning algorithms, user writing style, surrounding context, etc., rather than extending all the way out to the page margin.

The invention is defined in the independent claims. Optional features of the invention are defined in the dependent claims.

Further aspects of the subject technology, features, and advantages, as well as the structure and operation of various aspects of the subject technology are described in detail below with reference to accompanying drawings.

### BRIEF DESCRIPTION OF THE FIGURES

Aspects of the subject technology are described with reference to the accompanying drawings. In the drawings, like reference numbers may indicate identical or functionally similar elements.
FIG. 1 depicts a diagram of a system for providing text pen input, according to aspects of the subject technology.
FIG. 2 depicts a guideline associated with a pen input including characters, according to aspects of the invention.
FIG. 3 depicts an extended guideline associated with a pen input including characters, according to aspects of the invention.
FIG. 4 depicts multiple guidelines associated with a pen input including characters, according to aspects of the invention.
FIG. 5 depicts a text box corresponding to a guideline associated with a pen input including characters, according to aspects of the subject technology.
FIG. 6 depicts a horizontally extended text box corresponding to an extended guideline associated with a pen input including characters, according to aspects of the subject technology.
FIG. 7 depicts a vertically extended text box corresponding to multiple guidelines associated with a pen input including characters, according to aspects of the subject technology.
FIG. 8 depicts a guideline associated with a pen input including an angled string of characters, according to aspects of the subject technology.
FIG. 9 depicts a curved guideline associated with a pen input including a nonlinear string of characters, according to aspects of the subject technology.
FIG. 10 depicts multiple curved guidelines associated with a pen input including characters, according to aspects of the subject technology.
FIG. 11 depicts a guideline associated with a pen input including characters and having a length that depends on a background object, according to aspects of the subject technology.
FIG. 12 depicts multiple guidelines associated with a pen input including characters that overlap a background object and each having a length that depends on an edge of the background object, according to aspects of the subject technology.
FIG. 13 depicts the multiple guidelines of FIG. 12 with redisplayed characters that do not overlap the background object, according to aspects of the subject technology.
FIG. 14 depicts a guideline associated with a pen input including characters and having a maximum length that depends on a background object, according to aspects of the subject technology.
FIG. 15 depicts the guideline of FIG. 14 with redisplayed characters modified according to a maximum length of the guideline, according to aspects of the subject technology.
FIG. 16 depicts multiple guidelines associated with a pen input including characters, the multiple guidelines each having a length that depends on a user-provided boundary, according to aspects of the subject technology.
FIG. 17 depicts multiple guidelines associated with a pen inputs corresponding to a list, according to aspects of the subject technology.
FIG. 18 shows a flowchart illustrating a method for providing guidelines for inputting text with a pen input device according to aspects of the invention.
FIG. 19 conceptually illustrates an example electronic system with which some implementations of the subject technology can be implemented.

### DETAILED DESCRIPTION

While aspects of the subject technology are described herein with reference to illustrative examples for particular applications, it should be understood that the subject technology is not limited to those particular applications. Those skilled in the art with access to the teachings provided herein will recognize additional modifications, applications, and aspects within the scope thereof and additional fields in which the subject technology would be of significant utility.

Pen-enabled document editing applications may present a user with a blank canvas or a rigidly organized document template similar to lined ruled paper. However, with a blank canvas, it may be difficult for the user to devise any meaningful structure, resulting in a messy or disorganized document that may cause the user to perform revisions and/or corrections that can be frustratingly time consuming and can waste computing power. On the other hand, with a rigid template such as an electronic template that mimics lined ruled paper, the user may be discouraged from drawing figures, diagrams, or other creative content that deviates from the template's guidance.

The subject disclosure provides systems and methods for providing a text pen mode in a pen-enabled editor application that extracts information from current or previously provided pen inputs to provide real-time adaptive guidance for inputting handwritten text with a text pen device.

According to an aspect, a pen-enabled editor application for an electronic device is disclosed that provides adaptive guidelines for handwritten text. The adaptive guidelines are generated, in real time with the handwritten text, to allow the user to take advantage of the freeform input possibilities of a blank page, while still benefitting from the neatness and organization that results from writing on a lined page. The adaptive guidelines are generated and have a location and a length that changes with measured aspects of the handwritten input text, as the text is written. The handwritten input text may be provided by a pen device interacting with a display device of the electronic device.

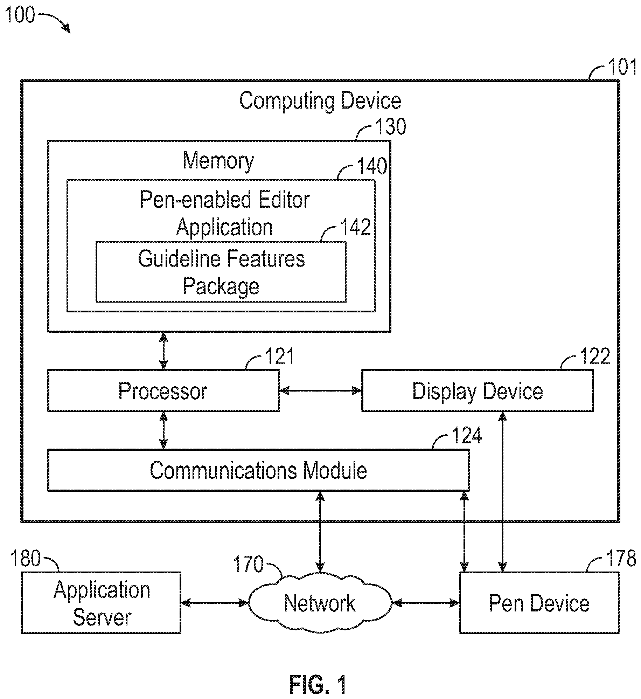

Figure 1 illustrates an exemplary system 100 for guided text input using a pen input device or pen device, according to aspects of the subject technology. System 100 includes computing device 101, pen device 178, network 170, and application server 180. Computing device 101 and/or pen device 178 may be coupled to application server 180 over network 170.

Computing device 101 includes processor 121, one or more input/output components such as display device 122, communications module 123, and memory 130. Memory 130 includes pen-enabled editor application 140, which may include guideline features package 142.

In aspects of the subject technology, computing device 101 is a pen-enabled device that may receive pen input from pen device 178 via display device 122. For example, computing device 101 may be a desktop all-in-one computer, tablet or convertible computer, laptop computer, smart phone, portable gaming console, or other device having a display device 122 supporting pen input.

In this description, pen input is used to refer generally to input from pen device 178, which may be implemented as a pen or a stylus that can interface with display device 122 of computing device 101. For example, pen device 178 may be an active device that includes processing circuitry, memory, and/or one or more applications stored in the pen device memory, or may be a passive device having a material composition configured to be detectable by circuitry within display device 122. For example, a passive pen device may interface with capacitive or resistive touchscreens, display digitizers, peripheral tablet devices, or other input devices coupled to or integrated with display device 122. In some aspects of the subject technology, display device 122 may correspond to a display projector or augmented reality eyewear, in which case pen device 178 be implemented as an air pen that provides pen input without contacting a physical surface.

A user desiring to hand write text with pen device 178 and computing device 101 may, for example, access an application storefront supported by application server 180 to download and install pen-enabled editor application 140 onto computing device 101. Thus, computing device 101 may utilize communications module 123, for example an Ethernet adapter, wireless card or cellular modem, to communicate with application server 180 over network 170. In aspects of the subject technology, pen-enabled editor application 140 may be provided on installable media, for example on an optical disc, flash memory card, or other device. In other aspects of the subject technology, pen-enabled editor application 140 may be preinstalled onto computing device 101, or pen-enabled editor application 140 may be integrated as part of an operating system of computing device 101.

As indicated in FIG. 1, pen device 178 may interact with pen-enabled editor application 140 via display device 122 (e.g., by actively transmitting communications to electrodes or other receiving components in the display device, or by passively causing detectable changes such as capacitive or resistive changes in electrodes or other receiving components in the display device) and/or may interact with pen-enabled editor application 140 by receiving and transmitting signals via communications module 123.

As shown in FIG. 1, the pen-enabled editor application 140 includes guideline features package 142, which may be included with pen-enabled editor application 140 or may be obtainable (e.g., from application server 180) as an add-on to pen-enabled editor application 140. Pen-enabled editor application 140 may provide a user with the ability to enter handwritten text and/or drawings along with an option to digitize and/or clean up the handwritten input after entry. Pen-enabled editor application 140 may also provide a user with other types of input options, such as options to input content from a keyboard and/or options for insertion of objects such as images, videos, or other figures, via a file browser or drag-and-drop operation.

Guideline features package 142 includes features for pen-enabled editor application 140 that help provide unobtrusive writing guidance to a user entering handwritten text, for improved legibility and organization of a document. In pen-enabled editor application 140, a "text pen" mode may be selectable by a user or may be or automatically started when the application detects writing of text (e.g., by detecting at least one character in a pen input from pen device 178). A character may include a letter, a number, or a symbol corresponding to any of various human languages.

Once in the text pen mode, pen-enabled editor application 140 provides, at least when text input is being provided to the application using pen device 178, a guideline that is generated responsive to the entering of the text input. The guideline may be provided at a location, and having an adaptive length and/or shape that is dependent on one or more features of the entered text. The guideline extends beneath (e.g., along and adjacent to a bottom portion of) at least a portion of a representation of text provided in a pen input and extends beyond an end of the representation of the text by a length that is based one or more features of one or more handwritten characters. By default, the guideline may be horizontally straight (e.g., parallel to a top and/or bottom edge of a virtual page provided by the application), but the text pen mode may also, or alternatively, provide angled, curved, or irregular guidelines depending on the arrangement of the entered text. The guideline may grow, shrink, and/or change shapes in real time with the entry of the handwritten text to adapt to the direction, shape, speed, and size (and/or other features) of the text as it is being written.

The guideline may extend through one or more baseline locations associated with one or more entered characters. For example, a baseline location may be separated vertically from a detected bottom of an "a" or a "k" or may pass through the stem of a "y" (as examples).

Providing an adaptive, real-time guideline may help encourage creativity and freeform mixed layouts where drawings, figures, and text may be placed anywhere in the document, while harnessing the power of a modern computing device to improve (e.g., the neatness and/or organization) the ultimate digital representation of the handwritten input. To that end, the guideline may extend out a certain distance according to various considerations, including heuristics, machine learning algorithms, user writing style, surrounding context, etc., rather than extending all the way out to the page margin of a virtual page of application 140.

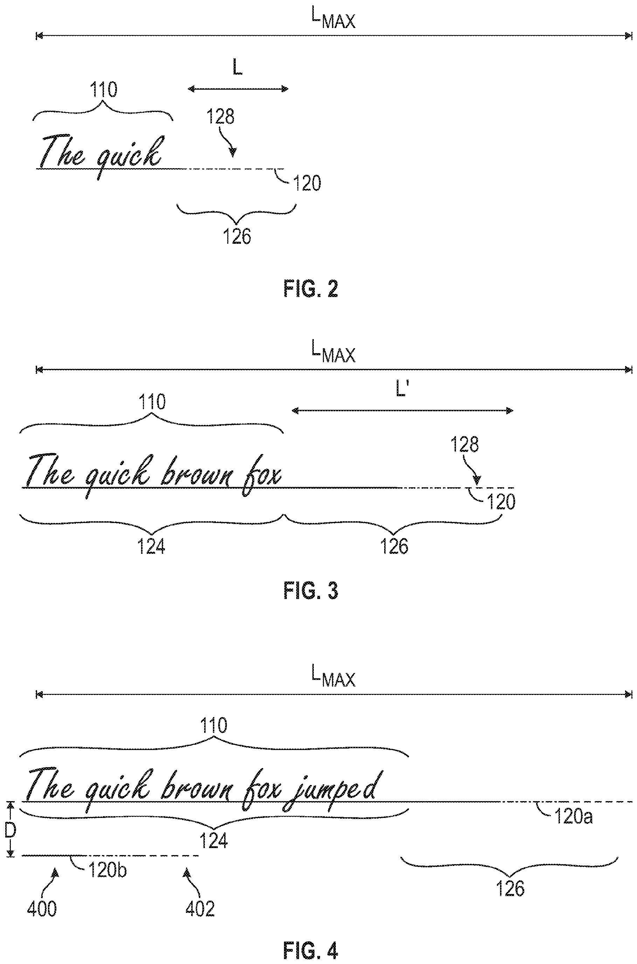

FIGS. 2-4 show examples of guidelines according to aspects of the invention that may be provided responsive to, and based on features of, characters provided in handwritten text in a pen input to application 140. For example, FIG. 2 shows a representation 110 of text "The quick" that has been handwritten by a user using, for example, pen device 178 to write the text (e.g., on a surface of display device 122). A guideline 120 is shown that includes a portion 124 that runs along and adjacent to the text (e.g., separated from the bottommost portion of some letters and extending through hanging portions of other letters such as the "q" in FIG. 2) and an extending portion 126 that extends from portion 124 and beyond an end of the text (i.e., beyond the character "k" in the example of FIG. 2).

Extending portion 126 is provided as a guide for the user to enter additional text, associated with the already entered text "The quick" at a location and in a direction that is consistent with the location and direction of the already entered text and encourages neatness and legibility in the ultimate digital document.

As shown, extending portion 126 includes a fading portion 128 that fades in darkness, texture, and/or color into a background on which the text is written, with increasing distance from the last character. As shown, extending portion 126 has a length L. L may be an adaptive length that grows, shrinks, appears, disappears, changes shape, and/or otherwise evolves based on the text that is written by the user. Guideline 120 may appear when a first character in a pen input from pen device 178 is detected. For example, pen device 178 can be used to draw pictures or other non-character entries that do not cause a guideline to be displayed by pen-enabled editor application 140.

For example, length L may be based on the width of one or more of the characters of the already entered text "The quick" (e.g., a median or mean length of the characters or a width of the last character). Length L may also be based on a speed or rate at which the characters are being written. For example, extending portion 126 of guideline 120 may have a length that is equal to a multiplicative factor times the determined character width. The multiplicative factor may be determined based on the writing rate. For example, extending portion 126 may extend ten character widths beyond the last written character for a moderate writing rate, twenty characters beyond the last written character for a fast writing rate, or five characters beyond the last written character for a slow writing rate.

Length L can be modified with the entry of each written character or after each set of N written characters (e.g., the length can be modified after each set of three written characters, five written characters, or ten written characters). As shown, guideline 120 has an overall length (including extended portion 126) that is less than a maximum line length L_{MAX}. Maximum line length L_{MAX} may be, for example a page width (or a width inside a drawable area of a page as bounded by automatic or user-defined margins) of a virtual page provided by application 140.

Portion 124 of guideline 120 also grows in length as additional characters are written. FIG. 3 shows an example in which portion 124 has grown to extend along and adjacent to the text "The quick brown fox" which has been handwritten by a user with pen device 178, and in which extending portion 126 has moved to begin after the new last character "x". In the example of FIG. 3, extending portion 126 has also grown to a length L' (e.g., due to an increase in writing rate during the writing of "brown fox" relative to the rate of writing during the writing of "The quick"). The overall length of guideline 120 is still less than maximum length L_{MAX} in FIG. 3.

FIG. 4 shows an example in which guideline 120 has grown to an overall length equal to maximum length L_{MAX} and a new guideline 120b has been generated for a new line of text. As shown, guideline 120b is separated from guideline 120a and extends in a direction that is parallel to guideline 120a. Distance D may be determined based on the vertical height of one or more of the characters of the text written on guideline 120a. For example, distance D may be equal to the height of a tallest character on the line associated with guideline 120a plus a margin. The margin may be a default margin or may be determined based on previously written characters (e.g., to ensure enough space between guidelines 120a and 120b for the user to write any character). Distance D may be determined based on the text associated with guideline 120a and/or one or more additional previously written lines of text.

Guideline 120b may appear earlier during the writing on guideline 120a for faster writers than for slower writers. Guideline 120b of FIG. 4 includes a solid portion 400 and a fading portion 402 that extends from the solid portion. Guideline 120a may be persistent and remain displayed even when the user begins writing on guideline 120b or guideline 120a may disappear when the user begins writing on another line or stops writing for a period of time. Guidelines 120a and 120b, and/or other displayed guidelines may be toggled on and off by a different input to device 101 (e.g., by a finger tap or pen tap on display device 122). Guidelines 120a and 120b, and/or other displayed guidelines may be temporary guidelines that are removed in a final document generated by application 140 or may be permanent portions of the final document.

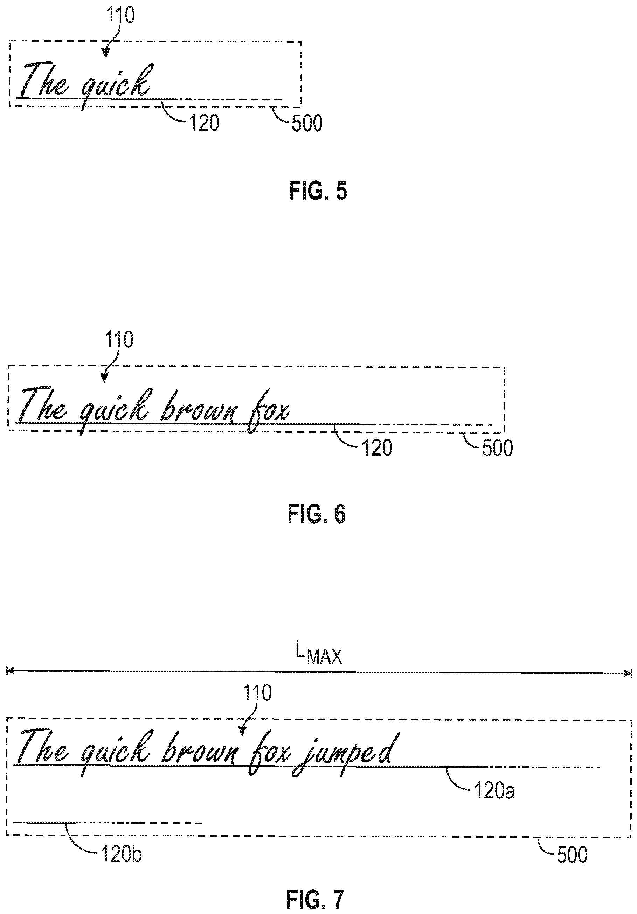

Although not displayed in FIGS. 2-4, each guideline may be associated with a text box that is generated, sized, and positioned to contain one or more generated guidelines and the handwritten text provided by the user. FIGS. 5-7 show examples of text boxes that may be generated along with the guidelines as described above in connection, respectively, with FIGS. 2-4. As shown in FIG. 5, a text box such as text box 500 may be generated that encapsulates guideline 120 and text as represented by representation 110. Text box 500 has a height and a length that are determined based on the identified features of the characters of the input text in pen input from pen device 178. For example, the text box 500 may have a height that is greater than the height of the tallest character within the text box. For example, the text box 500 may have a length that is equal to the length of guideline 120 or that is equal to the length of guideline 120 plus a margin such as a one character margin, a two character margin, or any other suitable margin.

As shown in FIG. 6, text box 500 increases in length when additional text is entered in pen input from pen device 178. In the example of FIG. 7, text box 500 increases in height when additional guideline 120b is generated, to accommodate both of guidelines 120a and 120b. However, this is merely illustrative. In other implementations, a separate text box may be generated for guideline 120b and its associated text.

Text box 500 may be generated in the background by application 140, but not displayed to the user, unless the user provides an additional input (e.g., a finger tap or other non-writing input) that causes application 140 to display the text box. When the text box is displayed, the text box may be manipulable so that the handwritten text in the received pen input and/or the associated guidelines can be encapsulated to be selected, dragged, dropped, rotated, resized, or otherwise manipulated by the user by moving, rotating, resizing or otherwise manipulating the text box.

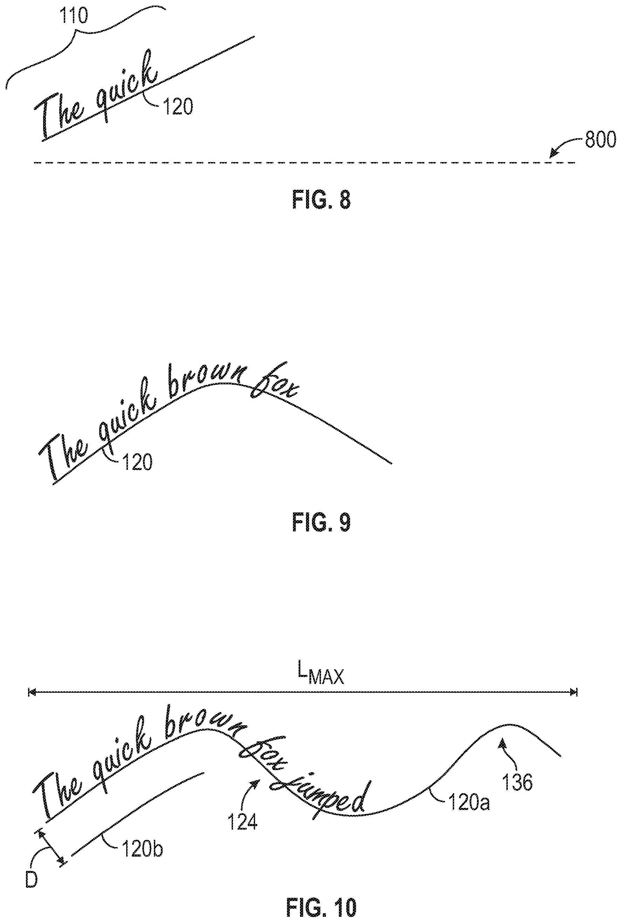

In the examples of FIGS. 2-7, horizontal, straight guidelines are shown. However, application 140 may also provide guidelines that are adaptive in shape and/or direction to accommodate and guide handwritten text other than text along a straight line. For example, FIGS. 8-10 show an example of angled and/or curved guidelines generated response to a pen input that includes text written along a curve.

In the example of FIG. 8, a representation 110 of text "The quick" (e.g., text that has been handwritten by a user using, for example, pen device 178 to write the text on a surface of display device 122) extending at a non-horizontal angle is shown. As shown, the text "The quick" is written with an increasing distance relative to a horizontal direction 800. Horizontal direction 800 may be defined as a direction parallel to the top and/or bottom of a rectilinear display, virtual page, or drawable area. Although the text of FIG. 8 is angled with respect the horizontal, the text is written in a straight line. Responsively, guideline 120 is generated by application 140 as a straight guideline that extends at an angle with respect to horizontal direction 800.

In the example of FIG. 9, additional text "brown fox" is handwritten by the user with pen device 178 along a curve that deviates smoothly with respect to the angle of the original text "The quick". As shown, guideline 120 extends changes shape and extends along a curve that corresponds to the curve of the written text. As shown in FIG. 10, further additional text "jumped" has been entered with an additional change in direction to form a wavy pattern of input text. Responsively, guideline 120a projects out a wavy guideline to guide future input text along the same wavy curve. For example, once multiple changes in the curve along which the text is written are detected, application 140 may begin to predict additional curve changes and to project a guideline with the predicted additional curve changes as shown in FIG. 10.

As indicated in FIG. 10, a curved or angled guideline can have an overall length that exceeds the maximum length L_{MAX} for a straight guideline. However, once curved (and/or angled) guideline 120a reaches, for example, an edge or a margin of a virtual page, additional guideline 120b may be generated that is parallel to and spaced apart from guideline 120a (e.g., by a distance D as described above in connection with FIG. 4).

An angled and/or curved guideline 120 includes a portion 124 that runs along and adjacent to the text and an extending portion 126 that extends from portion 124 and beyond an end of the text (i.e., beyond the character "d" in the example of FIG. 10) as with the straight guidelines of FIGS. 2-4.

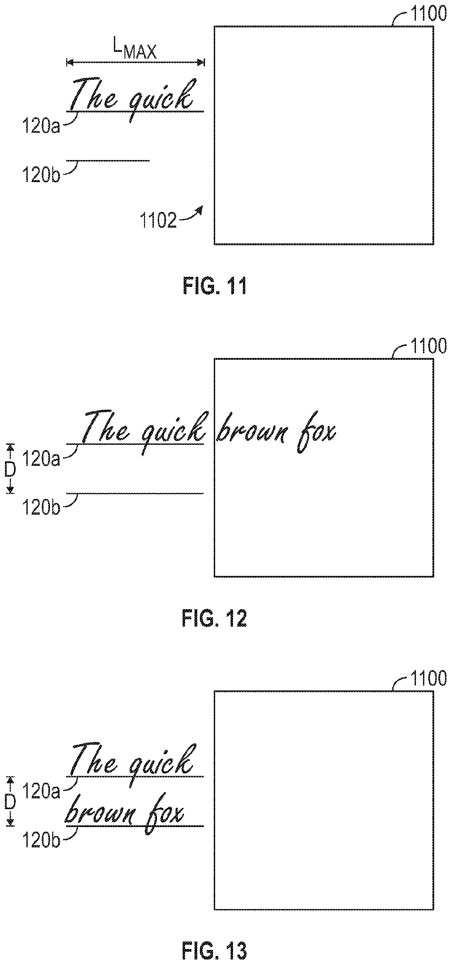

Pen-enabled editor application 140 may generate guidelines that avoid extending into other document elements, such as other text boxes or drawings that have previously been placed or entered. FIG. 11 shows an example of a representation 110 of text "The quick" that has been written with pen device 178 in proximity to a document element 1100 such as a drawing, another text box, an image, an embedded video or the like. In the example of FIG. 11, guideline 120a has already extended to a maximum length L_{MAX} that is defined between the beginning of the current line of handwritten text and an edge 1102 of element 1100 (e.g., to prevent guideline 120a from extending over element 1100) and an additional guideline 120b has been provided.

Additional guideline 120b may discourage the user from writing over element 1100. However, as shown in FIG. 12, even if the user provides a pen input that includes handwritten text that extends over element 1100, a representation 110 of that handwritten text may be temporarily provided over element 1100, even as additional guideline 120b is displayed.

When application 140 determines that the user has stopped entering text, application 140 may redisplay the text that was entered over element 1100 on the guidelines 120a and 120b as shown in FIG. 13. In this way, the user may be provided with the ability to quickly and easily enter handwritten text in the vicinity of another document object, that is subsequently neatened and organized in accordance with the generated guidelines.

In the example of FIGS. 12 and 13, the entered text is resized (along with a reduction in the distance between guideline 120a and 120b from D to D') to fit on the provided guidelines. However, this is merely illustrative. In other scenarios, application 140 may redisplay the text that was entered over element 1100 without resizing the text (e.g., by redisplaying along additional lines that do not overlap element 1100.

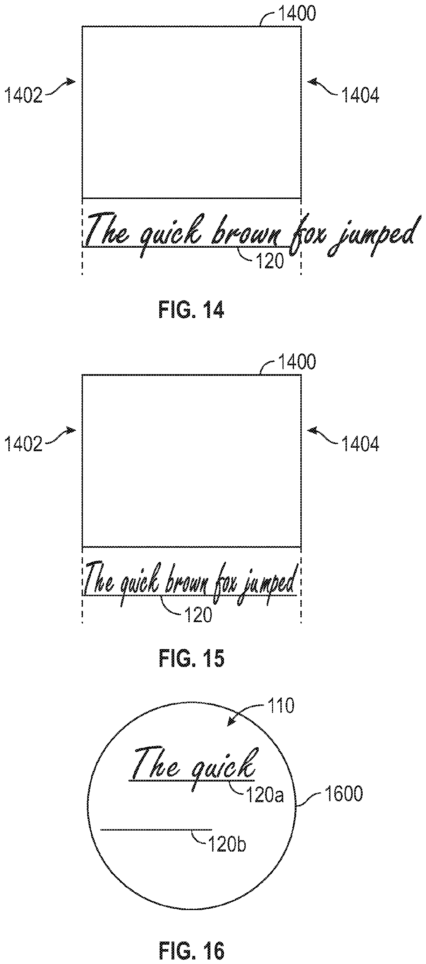

Although examples have been described in which an additional guideline is provided when a current guideline reaches a maximum length, in some circumstances application 140 may provide only a single guideline. For example, FIGS. 14 and 15 illustrate a scenario in which application 140 determines that the handwritten text is a figure caption for a figure and provides only a single guideline.

As shown in FIG. 14, a figure (e.g., an image, a drawing, or an embedded video) is provided on a virtual page along with a representation 110 of text input "The quick brown fox jumped" that has been entered in a pen input below figure 1400. Based on, for example, the proximity (e.g., within a threshold distance) of the text to figure 1400 and the direction of the entered text below figure 1400, application 140 may identify the entered text of FIG. 14 as a figure caption.

In the example of FIG. 14, the entered text (which has been entered at the location of representation 110 of that entered text) extends beyond the edges 1402 and 1404 of the figure. However, the guideline 120 generated below that text is confined to within the edges 1402 and 1404. Because the text has been identified as a figure caption, rather than generating an additional guideline when the entered text extends beyond the edges 1402 and 1404, the entered text is resized to fit on the provided guideline, as shown in FIG. 15. After the text has been resized and redisplayed as in FIG. 15, guideline 120 may be removed from the display, if desired.

Examples have been described in which the boundaries to which a guideline provided by application 140 can extend are defined by the edges of a virtual page or the edge of another document element. However, guidelines can also be generated responsive to user-generated boundaries.

For example, FIG. 16 illustrates a scenario in which a user has drawn, with pen device 178, a circular boundary 1600. Although a circular boundary is depicted, it should be appreciated that application 140 provides the user with the ability to draw contiguous or non-contiguous boundaries of any desired shape or size.

In the example of FIG. 16, after drawing boundary 1600, the user has entered the text "The quick" within the circular boundary. Guideline 120a has been generated under the representation 110 of the handwritten text and, because guideline 120a extends entirely across the circle (e.g., with margins between the ends of the guideline and the circle itself), an additional guideline 120b, within the circular boundary and extending from an edge thereof has been generated to help guide the user in continuing to provide handwritten text within the user-generated boundary.

Examples have been described in which the boundaries to which a guideline provided by application 140 can extend are defined by the edges of a virtual page, the edge of another document element, or a user-generated boundary. However, guidelines can also be generated based on a vertical distribution of previously-entered text.

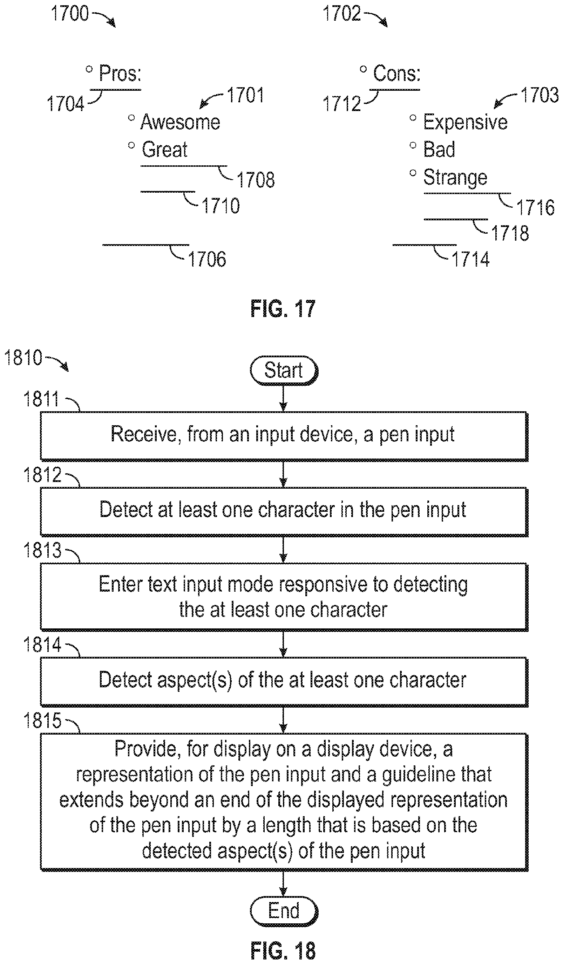

For example, FIG. 17 shows an example of a handwritten list with various guidelines that have been generated based on the vertical distribution of various columns of previously entered text. In the example of FIG. 17, a list is shown that includes primary columns 1700 (e.g., a "Pros" column) and 1702 (e.g., a "Cons" column), each with a respective sub-column 1701 and 1703.

As the user begins writing "Pros" (e.g., with pen device 178), guideline 1704 may be generated as described above in connection with the "The quick" example of FIG. 2 (e.g., with an extending portion 126 and a maximum length L_{MAX} that is based on the virtual page width). However, when the user either skips an amount of horizontal white space (e.g., an amount that is greater than the space between the characters of "Pros" by more than a threshold such as threshold of five spaces or ten spaces) and begins writing "Cons", application 140 may determine that a new column of text is being written and provide a new guideline 1712, horizontally separated from guideline 1704. In response to detecting two columns of text, application 140 may generate guidelines 1704 that extend along and adjacent to the primary column headings and having lengths determined by the length of the headings. Application 140 may also generate guidelines 1706 and 1714, each vertically separated from a respective primary column header guideline 1704 and 1712 and horizontally separated from each other by the same distance as the distance between guidelines 1704 and 1712. In this way, application 140 provides guidelines for multiple, vertically aligned primary column headings.

The user may also enter text for the sub-columns in each primary column. In the example of FIG. 17, the user has provided pen input that includes the text "Awesome" and "Great", in vertically aligned lines of text that are vertically separated from each other and indented relative to the primary column text "Pros". Responsively, application 140 provides a sub-column guideline 1708 along and adjacent to the most recent entry in the sub-column and an additional guideline 1710 for a next entry in the sub-column.

Sub-column guidelines 1708 and 1710 each have an individual length that is determined based on the width of the sub-column entries. For example, guideline 1708 may include a portion that extends along and adjacent to the text "Great" and an extending portion that extends beyond the last "character" to a maximum length (e.g., a maximum length equal to an average of the widths of the previous column entries or a width of a maximum-length entry in the sub-column). Based on the writing rate and completeness of the previous column entries, guideline 1710 may be provided (e.g., when guideline 1708 approaches or reaches the maximum length).

In the example of FIG. 17, the user has also provided pen input that includes the text "Expensive", "Bad", and "Strange", vertically separated from each other and indented relative to the primary column text "Cons". Responsively, application 140 provides a sub-column guideline 1716 along and adjacent to the most recent entry in the sub-column and an additional guideline 1718 for a next entry in the sub-column.

Sub-column guidelines 1716 and 1718 each have an individual length that is determined based on the width of the sub-column entries as described in connection with guidelines 1708 and 1710. For example, guideline 1716 may include a portion that extends along and adjacent to the text "Strange" and an extending portion that extends beyond the last character "e" to a maximum length (e.g., a maximum length equal to an average of the widths of the previous column entries or a width of a maximum-length entry in the sub-column). Based on the writing rate and completeness of the previous column entries, guideline 1718 may be provided (e.g., when guideline 1716 approaches or reaches the maximum length).

As shown in FIG. 17, primary column guidelines 1706 and 1714 are vertically separated from respective primary column guidelines 1704 and 1712 and are vertically aligned with respective primary column guidelines 1704 and 1712. Sub-column entries in sub-columns 1701 and 1703, along with the sub-column guidelines therein, are interposed between and indented relative to the vertically aligned primary column guidelines.

Although, in the example described above in connection with FIG. 17, multi-column input such as list input is detected based on the pen input of the horizontally separated text "Pros" and "Cons", this is merely illustrative. Application 140 can also identify a list having one or more columns and/or one or more sub-columns by detecting multiple vertically aligned text entries that are shorter than the virtual page width. For example, in the list of FIG. 17, the user may first write (e.g., on display device 122 with pen device 178) "Pros" and then "Awesome" vertically separated and indented with respect to "Pros". Application 140 detects the vertically separated text that has a length that is shorter than the page width (and/or detects an indented text entry), and generates list-associated guidelines such as guidelines 1704, 1706, 1708, and 1710. In this way, list-specific guidelines for a list having a single primary column with or without one or more sub-columns can also be provided.

It should also be appreciated that, although the examples described above in connection with FIG. 17 describe the text "Pros" as being input first, application 140 can identify list aspects of list-associated text regardless of which entries are provided first and in which order. For example, the text "Cons" can be entered before the text "Pros" or sub-column entries can be provided that are later provided with a primary column headline. Accordingly, application 140 provides the user with the freedom to generate lists of various sizes and arrangements while continually using the previously provided entries to provide guidance to enhance the legibility and organization of the ultimate resulting document.

FIG. 18 depicts a flow diagram of an example process 1810 according to aspects of the invention for providing adaptive guidelines with a pen-enabled editor application such as pen-enabled editor application 140 of FIG. 1, according to aspects of the subject technology. For explanatory purposes, the example process of FIG. 18 is described herein with reference to the components of FIG. 1-FIG. 17. Further for explanatory purposes, the blocks of the example process of FIG. 18 are described herein as occurring in serial, or linearly. However, multiple blocks of the example process of FIG. 18 may occur in parallel. In addition, the blocks of the example process of FIG. 18 need not be performed in the order shown and/or one or more of the blocks of the example process of FIG. 18 need not be performed.

In the depicted example flow diagram, at block 1811, a pen input such as a pen input from pen device 178 of FIG. 1 is received by a pen-enabled editor application (e.g., by application 140 running on processor 121 via display device 122). The pen input may be provided on a virtual page provided by the pen-enabled editor application. The virtual page may have edges and/or margins (e.g., vertical and/or horizontal edges and/or margins of a drawable area) within which the pen input is accepted.

At block 1812, the pen-enabled editor application detects at least one character in the pen input. The pen input may include other input such as a drawing, a boundary, or other hand-drawable input. The at least one character may include one or more letters, numbers, symbols, or other characters such as one or more of the characters of the text "The quick" as described in various examples here (see, e.g., FIG. 2).

At block 1813, the pen-enabled editor application enters a text input mode, responsive to detecting the at least one character. It should also be appreciated that the text input mode may be selectable by the user (e.g., before any characters of text are provided in a pen input). In the text input mode, additional pen input is interpreted as handwritten text and various operations for providing guidance to the user for additional text input are performed by the application.

For example, at block 1814, the pen-enabled editor application detects one or more aspects of the at least one character. For example, the pen-enabled editor application may detect aspects such as the height and/or width of each character, the size of the spaces between one or more pairs of adjacent characters, an angle with respect to a horizontal or vertical edge of the virtual page, a curved direction of entry of multiple characters, and/or a writing rate (e.g., a rate in letters per second or words per minute) of the at least one character.

At block 1815, the pen-enabled editor application provides, for display on a display device (e.g., display device 122), a representation of the pen input (see, e.g., representation 110 as described herein in connection with various examples) and a guideline (see, e.g., guidelines 120, 120a, 120b, 1704, 1706, 1708, 1710, 1712, 1716, and 1718 as described herein in connection with various examples). The guideline extends beyond an end of the displayed representation of the pen input by a length that is based on the detected aspect(s) of the pen input as described above in connection with, for example, FIGS. 2-17.

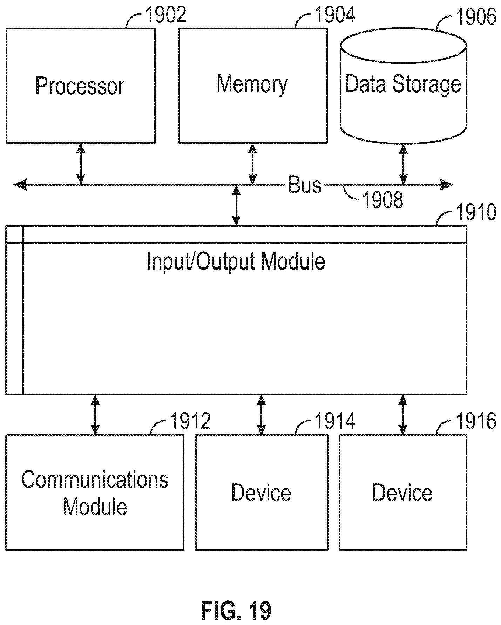

FIG. 19 conceptually illustrates an example electronic system with which some implementations of the subject technology can be implemented. Electronic system 1900 can be a computer, phone, PDA, or any other sort of electronic device. Such an electronic system includes various types of computer readable media and interfaces for various other types of computer readable media. Electronic system 1900 includes a bus 1908, processing unit(s) 1912, a system memory 1904, a read-only memory (ROM) 1910, a permanent storage device 1902, an input device interface 1914, an output device interface 1906, and a network interface 1916.

Bus 1908 collectively represents all system, peripheral, and chipset buses that communicatively connect the numerous internal devices of electronic system 1900. For instance, bus 1908 communicatively connects processing unit(s) 1912 with ROM 1910, system memory 1904, and permanent storage device 1902.

From these various memory units, processing unit(s) 1912 retrieves instructions to execute and data to process in order to execute the processes of the subject disclosure. The processing unit(s) can be a single processor or a multi-core processor in different implementations.

ROM 1910 stores static data and instructions that are needed by processing unit(s) 1912 and other modules of the electronic system. Permanent storage device 1902, on the other hand, is a read-and-write memory device. This device is a non-volatile memory unit that stores instructions and data even when electronic system 1900 is off. Some implementations of the subject disclosure use a mass-storage device (for example, a magnetic or optical disk and its corresponding disk drive) as permanent storage device 1902.

Other implementations use a removable storage device (for example, a floppy disk, flash drive, and its corresponding disk drive) as permanent storage device 1902. Like permanent storage device 1902, system memory 1904 is a read-and-write memory device. However, unlike storage device 1902, system memory 1904 is a volatile read-and-write memory, such a random access memory. System memory 1904 stores some of the instructions and data that the processor needs at runtime. In some implementations, the processes of the subject disclosure are stored in system memory 1904, permanent storage device 1902, or ROM 1910. For example, the various memory units include instructions for processing a social endorsement for an item in accordance with some implementations. From these various memory units, processing unit(s) 1912 retrieves instructions to execute and data to process in order to execute the processes of some implementations.

Bus 1908 also connects to input and output device interfaces 1914 and 1906. Input device interface 1914 enables the user to communicate information and select commands to the electronic system. Input devices used with input device interface 1914 include, for example, alphanumeric keyboards and pointing devices (also called "cursor control devices"). Output device interfaces 1906 enables, for example, the display of images generated by the electronic system 1900. Output devices used with output device interface 1906 include, for example, printers and display devices, for example, cathode ray tubes (CRT) or liquid crystal displays (LCD). Some implementations include devices, for example, a touchscreen that functions as both input and output devices.

Finally, as shown in FIG. 19, bus 1908 also couples electronic system 1900 to a network (not shown) through a network interface 1916. In this manner, the computer can be a part of a network of computers (for example, a local area network ("LAN"), a wide area network ("WAN"), or an Intranet, or a network of networks, for example, the Internet. Any or all components of electronic system 1900 can be used in conjunction with the subject disclosure.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, for example, microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic or solid state hard drives, read-only and recordable Blu-Ray^{®} discs, ultra density optical discs, any other optical or magnetic media, and floppy disks. The computer-readable media can store a computer program that is executable by at least one processing unit and includes sets of instructions for performing various operations. Examples of computer programs or computer code include machine code, for example, is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, for example, application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Aspects of the subject technology described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In aspects of the subject technology, a server transmits data (e.g., an HTML page) to a client device (e.g., for purposes of displaying data to and receiving user input from a user interacting with the client device). Data generated at the client device (e.g., a result of the user interaction) can be received from the client device at the server.

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components in aspects of the subject technology described above should not be understood as requiring such separation in all aspects of the subject technology, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

## Claims

1. A computer-implemented method (1810) comprising:
receiving (1811), from an input component of an electronic device (101), a pen input;
determining (1813) that an input mode for the pen input is a text-input mode;
identifying (1814) a feature of at least one character in the pen input, wherein the feature of the at least one character includes a size of the at least one character and a writing rate of the at least one character;
providing (1815) for display, on a display device (122) of the electronic device, a representation of the pen input and a guideline, wherein the guideline extends along and adjacent to at least a portion of the representation of the pen input and beyond an end of the representation of the pen input by a length that is based on the identified feature of the at least one character; and
determining the length of the guideline based on a product of a multiplicative factor and the size of the at least one character, and wherein the multiplicative factor is based on the writing rate.

2. The method of claim 1, wherein determining that the input mode for the pen input is the text-input mode includes identifying the at least one character in the pen input.

3. The method of claim 1, wherein determining that the input mode for the pen input is the text-input mode includes receiving a selection of the text-input mode.

4. The method of claim 1, further comprising:
receiving additional characters in additional pen input;
providing representations of the additional characters for display; and
extending the length of the guideline, while providing the representations of the additional characters, by an amount that is based on features of the additional characters.

5. The method of claim 4, further comprising:
obtaining a maximum length for the guideline;
providing the guideline with the maximum length; and
while providing the guideline with the maximum length, providing an additional guideline, separated from the guideline by a distance that is based on the features of the additional characters.

6. The method of claim 5, wherein the maximum length is equal to a width of a drawable area of a pen enabled editor display.

7. The method of claim 5, wherein the maximum length is less than a width of a drawable area of a pen enabled editor display and based on a median of a plurality of lengths of a plurality of vertically aligned lines of displayed characters.

8. The method of claim 1, wherein the length is further based on a context in which the pen input is entered, and.
wherein the context includes a displayed background object and wherein a maximum length of the guideline is based on a location of the displayed background object.

9. The method of claim 8, further comprising:
receiving additional characters in additional pen input, wherein the additional characters are received at locations that overlap the displayed background object;
providing representations of the additional characters for display at the locations that overlap the displayed background object;
providing the guideline with a length that extends to an edge of the displayed background object;
providing one or more additional guidelines adjacent to the edge based on features of the additional characters; and
providing instructions to redisplay the representations of the additional characters at locations corresponding to the one or more additional guidelines.

10. The method of claim 1, further comprising identifying a baseline location for the guideline relative to a bottom of the at least one character.

11. A system (100), comprising:
an input component;
a display device (122);
a memory (130) comprising instructions; and
a processor (121) configured to execute the instructions to:
receive (1811), from the input component, a pen input;
identify (1814) a size and a writing rate of at least one character in the pen input; and
provide (1815) for display, on the display device, a representation of the pen input and a guideline, wherein the guideline extends along and adjacent to at least a portion of the representation of the pen input and beyond an end of the representation of the pen input by a length that is based on the identified size and writing rate of the at least one character.

12. The system of claim 11, wherein the length is equal to the size of the at least one character multiplied by a multiplicative factor that is based on the writing rate.

13. The system of claim 12, wherein the at least one character comprises multiple characters, each having a width and wherein the size of the at least one character is a median of the widths of the multiple characters.

14. The system of claim 13, wherein the processor is further configured to:
obtain a maximum length for the guideline;
provide the guideline with the maximum length; and
while providing the guideline with the maximum length, provide an additional guideline, separated from the guideline by a distance that is based on the size of the at least one character, the additional guideline having a length that is based on the identified size and writing rate of the at least one character.

15. A non-transitory machine-readable storage medium (1902) comprising machine-readable instructions for causing a processor to execute a method comprising:
receiving (1811), from an input component of an electronic device, a pen input;
identifying (1814) features of handwritten text in the pen input, wherein the features of the handwritten text include a character height, a character width for the handwritten text, and a speed at which the handwritten text was provided in the pen input;
providing (1815) for display, on a display device of the electronic device, a representation of the handwritten text and a first guideline, wherein the first guideline extends along and adjacent to at least a portion of the representation of the handwritten text;
providing a second guideline, separated from the first guideline by a distance that is based on the identified features of the handwritten text, wherein the distance is based on the character height, and wherein the length is based on the character width and the speed, and
wherein the second guideline has a length that is based on the identified features of the handwritten text.

## Patentansprüche

1. Computerimplementiertes Verfahren (1810), umfassend:
Empfangen (1811), von einer Eingabekomponente einer elektronischen Vorrichtung (101), einer Stifteingabe;
Bestimmen (1813), dass ein Eingabemodus für die Stifteingabe ein Texteingabemodus ist;
Identifizieren (1814) eines Merkmals von mindestens einem Zeichen in der Stifteingabe, wobei das Merkmal des mindestens einen Zeichens eine Größe des mindestens einen Zeichens und eine Schreibgeschwindigkeit des mindestens einen Zeichens enthält;
Bereitstellen (1815) zur Anzeige auf einer Anzeigevorrichtung (122) der elektronischen Vorrichtung einer Darstellung der Stifteingabe und einer Leitlinie, wobei sich die Leitlinie entlang und benachbart zu mindestens einem Teil der Darstellung der Stifteingabe und über ein Ende der Darstellung der Stifteingabe hinaus um eine Länge erstreckt, die auf dem identifizierten Merkmal des mindestens einen Zeichens basiert; und
Bestimmen der Länge der Leitlinie basierend auf einem Produkt aus einem Multiplikationsfaktor und der Größe des mindestens einen Zeichens, wobei der Multiplikationsfaktor auf der Schreibgeschwindigkeit basiert.

2. Verfahren nach Anspruch 1, wobei die Bestimmung, dass der Eingabemodus für die Stifteingabe der Texteingabemodus ist, ein Identifizieren des mindestens einen Zeichens in der Stifteingabe umfasst.

3. Verfahren nach Anspruch 1, wobei die Bestimmung, dass der Eingabemodus für die Stifteingabe der Texteingabemodus ist, ein Empfangen einer Auswahl des Texteingabemodus umfasst.

4. Verfahren nach Anspruch 1, ferner umfassend:
Empfangen zusätzlicher Zeichen in einer zusätzlichen Stifteingabe;
Bereitstellen von Darstellungen der zusätzlichen Zeichen zur Anzeige; und
Verlängern der Länge der Leitlinie, während die Darstellungen der zusätzlichen Zeichen bereitgestellt werden, um einen Betrag, der auf den Merkmalen der zusätzlichen Zeichen basiert.

5. Verfahren nach Anspruch 4, ferner umfassend:
Ermitteln einer maximalen Länge für die Leitlinie;
Versehen der Leitlinie mit der maximalen Länge; und
während des Versehens der Leitlinie mit der maximalen Länge, Bereitstellen einer zusätzlichen Leitlinie, die von der Leitlinie durch einen Abstand getrennt ist, der auf den Merkmalen der zusätzlichen Zeichen basiert.

6. Verfahren nach Anspruch 5, wobei die maximale Länge gleich einer Breite eines zeichenbaren Bereichs einer stiftfähigen Editoranzeige ist.

7. Verfahren nach Anspruch 5, wobei die maximale Länge kleiner ist als die Breite eines zeichenbaren Bereichs einer stiftfähigen Editoranzeige und auf einem Median einer Mehrzahl von Längen einer Mehrzahl von vertikal ausgerichteten Zeilen von angezeigten Zeichen basiert.

8. Verfahren nach Anspruch 1, wobei die Länge ferner auf einem Kontext basiert, in dem die Stifteingabe eingegeben wird, und
wobei der Kontext ein angezeigtes Hintergrundobjekt enthält und wobei eine maximale Länge der Leitlinie auf einer Position des angezeigten Hintergrundobjekts basiert.

9. Verfahren nach Anspruch 8, ferner umfassend:
Empfangen zusätzlicher Zeichen in zusätzlichen Stifteingaben, wobei die zusätzlichen Zeichen an Stellen empfangen werden, die das angezeigte Hintergrundobjekt überlappen;
Bereitstellen von Darstellungen der zusätzlichen Zeichen zur Anzeige an den Stellen, die das angezeigte Hintergrundobjekt überlappen;
Versehen der Leitlinie mit einer Länge, die sich bis zu einem Rand des angezeigten Hintergrundobjekts erstreckt;
Bereitstellen einer oder mehrerer zusätzlicher Leitlinien in der Nähe des Randes basierend auf den Merkmalen der zusätzlichen Zeichen; und
Bereitstellen von Anweisungen zum erneuten Anzeigen der Darstellungen der zusätzlichen Zeichen an Stellen, die den einen oder mehreren zusätzlichen Leitlinien entsprechen.

10. Verfahren nach Anspruch 1, ferner umfassend ein Identifizieren einer Grundlinienposition für die Leitlinie relativ zu einer Unterseite des mindestens einen Zeichens.

11. System (100), umfassend:
eine Eingabekomponente;
eine Anzeigevorrichtung (122);
einen Speicher (130) der Anweisungen umfasst; und
einen Prozessor (121), der konfiguriert ist, um die Anweisungen auszuführen, um das Folgende durchzuführen:
Empfangen (1811), von der Eingabekomponente, einer Stifteingabe;
Identifizieren (1814) einer Größe und einer Schreibgeschwindigkeit von mindestens einem Zeichen in der Stifteingabe; und
Bereitstellen (1815) zur Anzeige auf der Anzeigevorrichtung einer Darstellung der Stifteingabe und einer Leitlinie, wobei sich die Leitlinie entlang und benachbart zu mindestens einem Teil der Darstellung der Stifteingabe und über ein Ende der Darstellung der Stifteingabe hinaus um eine Länge erstreckt, die auf der identifizierten Größe und Schreibgeschwindigkeit des mindestens einen Zeichens basiert.

12. System nach Anspruch 11, wobei die Länge gleich der Größe des mindestens einen Zeichens multipliziert mit einem Multiplikationsfaktor ist, der auf der Schreibgeschwindigkeit basiert.

13. System nach Anspruch 12, wobei das mindestens eine Zeichen mehrere Zeichen umfasst, die jeweils eine Breite haben, und wobei die Größe des mindestens einen Zeichens ein Median der Breiten der mehreren Zeichen ist.

14. System nach Anspruch 13, wobei der Prozessor ferner für Folgendes konfiguriert ist:
Ermitteln einer maximalen Länge für die Leitlinie;
Versehen der Leitlinie mit der maximalen Länge; und
während des Versehens der Leitlinie mit der maximalen Länge eine zusätzliche Leitlinie bereitzustellen, die von der Leitlinie durch einen Abstand getrennt ist, der auf der Größe des mindestens einen Zeichens basiert, wobei die zusätzliche Leitlinie eine Länge aufweist, die auf der identifizierten Größe und Schreibgeschwindigkeit des mindestens einen Zeichens basiert.

15. Nicht-transitorisches, maschinenlesbares Speichermedium (1902), das maschinenlesbare Anweisungen enthält, um einen Prozessor zu veranlassen, ein Verfahren auszuführen, das Folgendes umfasst:
Empfangen (1811), von einer Eingabekomponente einer elektronischen Vorrichtung, einer Stifteingabe;
Identifizieren (1814) von Merkmalen von handgeschriebenem Text in der Stifteingabe, wobei die Merkmale des handgeschriebenen Textes eine Zeichenhöhe, eine Zeichenbreite für den handgeschriebenen Text und eine Geschwindigkeit, mit der der handgeschriebene Text in der Stifteingabe bereitgestellt wurde, enthalten;
Bereitstellen (1815) zur Anzeige auf einer Anzeigevorrichtung der elektronischen Vorrichtung einer Darstellung des handgeschriebenen Textes und einer ersten Leitlinie, wobei sich die erste Leitlinie entlang und angrenzend an mindestens einen Teil der Darstellung des handgeschriebenen Textes erstreckt;
Bereitstellen einer zweiten Leitlinie, die von der ersten Leitlinie durch einen Abstand getrennt ist, der auf den identifizierten Merkmalen des handgeschriebenen Textes basiert, wobei der Abstand auf der Zeichenhöhe basiert, und wobei die Länge auf der Zeichenbreite und der Geschwindigkeit basiert, und
wobei die zweite Leitlinie eine Länge hat, die auf den identifizierten Merkmalen des handschriftlichen Textes basiert.

## Revendications

1. Un procédé (1810) mis en œuvre par ordinateur, comprenant :
le fait (1811) de recevoir, en provenance d'un composant de saisie d'un dispositif électronique (101), une saisie au moyen d'un stylet ;
le fait (1813) de déterminer qu'un mode de saisie pour la saisie au stylet est un mode de saisie de texte ;
le fait (1814) d'identifier une caractéristique d'au moins un caractère dans la saisie au stylet, la caractéristique dudit au moins un caractère comprenant une taille dudit au moins un caractère et une vitesse d'écriture dudit au moins un caractère ;
le fait (1815) de fournir pour affichage, sur un dispositif d'affichage (122) du dispositif électronique, une représentation de la saisie au stylet et d'une ligne directrice, la ligne directrice s'étendant le long d'au moins une partie de la représentation de la saisie au stylet, de façon adjacente à celle-ci, et au-delà d'une extrémité de la représentation de l'entrée au stylet par une longueur qui est fonction de la caractéristique identifiée dudit au moins un caractère ; et
le fait de déterminer la longueur de la ligne directrice sur la base d'un produit d'un facteur multiplicatif et de la taille dudit au moins un caractère, le facteur multiplicatif étant fonction de la vitesse d'écriture.

2. Le procédé selon la revendication 1, dans lequel la détermination que le mode de saisie pour la saisie au stylet est le mode de saisie de texte comprend le fait d'identifier ledit au moins un caractère dans la saisie au stylet.

3. Le procédé selon la revendication 1, dans lequel la détermination que le mode de saisie pour la saisie au stylet est le mode de saisie de texte comprend le fait de recevoir une sélection du mode de saisie de texte.

4. Le procédé selon la revendication 1, comprenant en outre :
le fait de recevoir des caractères supplémentaires dans une saisie au stylet supplémentaire ;
le fait de fournir des représentations des caractères supplémentaires pour l'affichage ; et
le fait d'allonger la longueur de la ligne directrice, tout en fournissant les représentations des caractères supplémentaires, selon une quantité qui est en fonction des caractéristiques des caractères supplémentaires.

5. Le procédé selon la revendication 4, comprenant en outre :
le fait d'obtenir une longueur maximale pour la ligne directrice ;
le fait de prévoir la ligne directrice avec la longueur maximale ; et
tout en donnant à la ligne directrice la longueur maximale, le fait de prévoir une ligne directrice supplémentaire, séparée de la ligne directrice par une distance qui est en fonction des caractéristiques des caractères supplémentaires.

6. Le procédé selon la revendication 5, dans lequel la longueur maximale est égale à une largeur d'une zone dessinable d'un affichage d'éditeur activé par un stylet.

7. Le procédé selon la revendication 5, dans lequel la longueur maximale est inférieure à une largeur d'une zone dessinable d'un affichage d'éditeur activé par un stylet et basée sur une médiane d'une pluralité de longueurs d'une pluralité de lignes alignées verticalement de caractères affichés.

8. Le procédé selon la revendication 1, dans lequel la longueur est en outre basée sur un contexte dans lequel la saisie au stylet est faite, et
dans lequel le contexte comprend un objet d'arrière-plan affiché et dans lequel une longueur maximale de la ligne directrice est basée sur un emplacement de l'objet d'arrière-plan affiché.

9. Le procédé selon la revendication 8, comprenant en outre :
le fait de recevoir des caractères supplémentaires dans une saisie au stylet supplémentaire, les caractères supplémentaires étant reçus en des emplacements qui chevauchent l'objet d'arrière-plan affiché ;
le fait de fournir des représentations des caractères supplémentaires pour affichage aux emplacements qui chevauchent l'objet d'arrière-plan affiché ;
le fait de donner à la ligne directrice une longueur qui s'étend jusqu'à un bord de l'objet d'arrière-plan affiché ;
le fait de prévoir une ou plusieurs lignes directrices supplémentaires adjacentes au bord en fonction des caractéristiques des caractères supplémentaires ; et
le fait de prévoir des instructions pour réafficher les représentations des caractères supplémentaires à des emplacements correspondant auxdites une ou plusieurs lignes directrices supplémentaires.

10. Le procédé selon la revendication 1, comprenant en outre le fait d'identifier un emplacement de base pour la ligne directrice par rapport à une partie inférieure dudit au moins un caractère.

11. Un système (100), comprenant :
un composant d'entrée ;
un dispositif d'affichage (122);
une mémoire (130) comprenant des instructions ; et
un processeur (121) configuré pour exécuter les instructions en vue de :
recevoir (1811), en provenance du composant d'entrée, une entrée au moyen d'un stylet ;
identifier (1814) une taille et une vitesse d'écriture d'au moins un caractère dans la saisie au stylet ; et
fournir (1815) pour affichage, sur le dispositif d'affichage, une représentation de la saisie au stylet et une ligne directrice, la ligne directrice s'étendant le long d'au moins une partie de la représentation de la saisie au stylet, de façon adjacente à celle-ci, et au-delà d'une extrémité de la représentation de la saisie au stylet sur une longueur qui est fonction de la taille identifiée et de la vitesse d'écriture dudit au moins un caractère.

12. Le système selon la revendication 11, dans lequel la longueur est égale à la taille dudit au moins un caractère multipliée par un facteur multiplicatif qui est basé sur la vitesse d'écriture.

13. Le système selon la revendication 12, dans lequel ledit au moins un caractère comprend plusieurs caractères, chacun ayant une largeur, et dans lequel la taille dudit au moins un caractère est une médiane des largeurs desdits plusieurs caractères.

14. Le système selon la revendication 13, dans lequel le processeur est en outre configuré pour :
obtenir une longueur maximale pour la ligne directrice ;
donner à la ligne directrice la longueur maximale ; et
tout en donnant à la ligne directrice la longueur maximale, prévoir une ligne directrice supplémentaire, séparée de la ligne directrice par une distance qui est fonction de la taille dudit au moins un caractère, la ligne directrice supplémentaire ayant une longueur qui est fonction de la taille et de la vitesse d'écriture identifiées dudit au moins un caractère.

15. Un support de stockage non transitoire (1902) lisible par machine, comprenant des instructions lisibles par machine pour amener un processeur à mettre en œuvre un procédé comprenant :
le fait (1811) de recevoir, en provenance d'un composant de saisie d'un dispositif électronique, une saisie au moyen d'un stylet ;
le fait (1814) d'identifier des caractéristiques de texte manuscrit dans la saisie au stylet, les caractéristiques du texte manuscrit comprenant une hauteur de caractère, une largeur de caractère pour le texte manuscrit et une vitesse à laquelle le texte manuscrit a été fourni dans la saisie au stylet ;
le fait (1815) de prévoir d'afficher, sur un dispositif d'affichage du dispositif électronique, une représentation du texte manuscrit et une première ligne directrice, la première ligne directrice s'étendant le long d'au moins une partie de la représentation du texte manuscrit et de façon adjacente à celle-ci ;
le fait de prévoir une deuxième ligne directrice, séparée de la première ligne directrice par une distance qui est fonction des caractéristiques identifiées du texte manuscrit, la distance étant fonction de la hauteur des caractères, et la longueur étant fonction de la largeur des caractères et de la vitesse, et
la deuxième ligne directrice ayant une longueur qui est fonction des caractéristiques identifiées du texte manuscrit.
